# EUROPÄISCHE PATENTSCHRIFT

(11) **EP 3 563 941 B1**
(45) Veröffentlichungstag und Bekanntmachung des Hinweises auf die Patenterteilung: **09.11.2022**
(21) Anmeldenummer: 19157697.4
(22) Anmeldetag: 18.02.2019
(51) Int. Cl.: B08B 9/44, B65G 43/08, B07C 5/34, G05B 19/042

(54) **FLASCHENREINIGUNGSMASCHINE**
BOTTLE CLEANING MACHINE
MACHINE DE NETTOYAGE DE BOUTEILLES

(30) Priorität: 04.04.2018 DE 102018205005
(43) Veröffentlichungstag der Anmeldung: 06.11.2019
(73) Patentinhaber: Krones AG, 93073 Neutraubling (DE)
(72) Erfinder: Wittmann, Norbert, 93073 Neutraubling (DE)
(74) Vertreter: Grünecker Patent- und Rechtsanwälte PartG mbB

(56) Entgegenhaltungen:
- EP-A1- 2 479 123
- CN-A- 107 168 159
- JP-A- H03 245 885

## Beschreibung

Die vorliegende Erfindung betrifft eine Flaschenreinigungsmaschine zum Reinigen von Flaschen in der getränkeverarbeitenden Industrie gemäß Anspruch 1 und ein Verfahren zum Entfernen von Flaschen aus einem Einlaufbereich einer Flaschenreinigungsmaschine gemäß Anspruch 8.

### Stand der Technik

Flaschenreinigungsmaschinen sind insbesondere im Bereich der getränkeverarbeitenden Industrie hinlänglich bekannt und werden üblicherweise dazu genutzt, wiederverwertbare Verpackungsmaterialien, insbesondere Flaschen aus Glas oder PET, zu reinigen und anschließend einer neuen Verwendung zuzuführen. Dazu umfassen diese Flaschenreinigungsmaschinen für gewöhnlich einen Einlaufbereich, dem eine Vielzahl von Flaschen in einem sich meist langsam bewegenden Massenstrom zugeführt, dann vereinzelt und durch die Flaschenreinigungsmaschine transportiert werden, während sie in dieser gereinigt werden. An einem sich anschließenden Auslauf werden die Flaschen dann aus der Flaschenreinigungsmaschine entfernt und möglicherweise weiteren Behandlungsschritten zugeführt.

Aufgrund des massenhaften Zuführens der Flaschen im Einlaufbereich kommt es bei der Vereinzelung und der Übergabe an die Transporteinrichtung, die die Flaschen durch die Flaschenreinigungsmaschine transportiert, gelegentlich dazu, dass Flaschen verklemmen oder gar zerstört werden. Ferner können beschädigte Flaschen zu einem fehlerhaften Transport im Einlaufbereich führen. Dann kann der Einlauf oder zumindest eine Bahn des Einlaufs, in der die Flaschen vereinzelt werden, blockiert sein, was den weiteren Betrieb der Flaschenreinigungsmaschine behindert. In einem solchen Fall muss bisher ein Bediener die Flaschenreinigungsmaschine anhalten und die beschädigte Flasche oder die übrig gebliebenen Splitter händisch aus dem Einlaufbereich entfernen und anschließend die Flaschenreinigungsmaschine wieder anfahren.

Dies sorgt zum einen für eine lange Unterbrechung der Flaschenreinigungsmaschine, da der Bediener häufig seinen Ort wechseln muss, um sämtliche Reste der Flasche zu beseitigen. Zum anderen birgt dies ein erhebliches Verletzungsrisiko für den Bediener, da er in den Massenstrom von Flaschen eingreifen muss, um gegebenenfalls Glasscherben händisch zu entfernen.

Aus der JPH03-245885 A ist eine solche Flaschenreinigungsmaschine bekannt, wobei ein Mechanismus zum Aufrichten einer umgefallenen Flasche zusammen mit einem mechanischen Detektor zum Erkennen einer umgefallenen Flasche verwendet wird.

Die EP 2 479 123 A1 betrifft weiterhin eine Transportvorrichtung und ein Verfahren zum Transport von Artikeln aus einer Fördereinrichtung, wobei die in einem Massenstrom herantransportierten Artikel in Transportrichtung mittels mindestens eines Trennelements in mindestens zwei Gassen aufgetrennt werden. Es ist eine Erfassungseinrichtung zum Erkennen von Artikeln mit unterschiedlicher Transportgeschwindigkeit oder von umgefallenen Artikeln vorgesehen. Eine Handhabungsvorrichtung ist vorgesehen, um von der Erfassungseinrichtung erkannte Behälter neu zu positionieren und/oder zu entfernen.

### Aufgabe

Ausgehend vom bekannten Stand der Technik besteht die zu lösende technische Aufgabe somit darin, eine Flaschenreinigungsmaschine anzugeben, aus der verklemmte oder beschädigte Fla-schen möglichst schnell entfernt werden können, während gleichzeitig die Sicherheit des Bedieners auf hohem Niveau gewährleistet ist.

### Lösung

Diese Aufgabe wird erfindungsgemäß durch die Flaschenreinigungsmaschine gemäß unabhängigem Anspruch 1 und das Verfahren zum Entfernen von Flaschen aus einem Einlaufbereich einer Flaschenreinigungsmaschine gemäß Anspruch 8 gelöst. Vorteilhafte Weiterbildungen der Erfindung sind in den Unteransprüchen erfasst.

Die erfindungsgemäße Flaschenreinigungsmaschine zum Reinigen von Flaschen in der getränkeverarbeitenden Industrie umfasst eine erste Transporteinrichtung zum ungeordneten, stehenden Transport von Flaschen in einem Massenstrom zu einem Einlaufbereich der Flaschenreinigungsmaschine, wobei im Einlaufbereich die Flaschen von der ersten Transporteinrichtung an eine zweite Transporteinrichtung übergeben werden, die die Flaschen vom Einlaufbereich durch die Flaschenreinigungsmaschine transportieren kann, wobei in oder vor dem Einlaufbereich eine Erkennungseinrichtung zum Erkennen einer im Einlaufbereich verklemmten oder beschädigten Flasche angeordnet ist und im Einlaufbereich ein Roboterarm vorgesehen ist, wobei der Roboterarm durch einen Bediener bedient werden kann, um eine verklemmte oder beschädigte Flasche zu manipulieren.

Der Einlaufbereich ist dabei als ein solcher Bereich zu verstehen, in dem zumindest eine Übergabe der Flasche von dem ungeordneten Massenstrom hin zu einem vereinzelten Transport der Flaschen in der zweiten Transporteinrichtung erfolgt. Dieser Einlaufbereich ist üblicherweise in einem Bereich angeordnet, der für den Bediener nicht zugänglich ist beziehungsweise zu weit von einem Rand oder sonstiger Begrenzung der ersten Transporteinrichtung entfernt ist, als dass der Bediener durch ein Eingreifen von außerhalb der ersten Transporteinrichtung in den Einlaufbereich hineingreifen könnte. Der Einlaufbereich kann dabei beispielsweise wenigstens 2m von jedem für den Bediener zugänglichen Teil der ersten Transporteinrichtung entfernt sein.

Die zweite Transporteinrichtung kann beispielsweise als umlaufende Kette in der Flaschenreinigungsmaschine verlaufen und einzelne Behälteraufnahmen zum Aufnehmen der Flasche umfassen.

Dass der Roboterarm im Einlaufbereich vorgesehen ist, ist zum einen so zu verstehen, dass er derart relativ zur Flaschenreinigungsmaschine positioniert sein kann, dass er in den Einlaufbereich eingreifen kann, um eine verklemmte oder beschädigte Flasche zu manipulieren. Er muss dabei nicht ortsfest vorgesehen sein, sondern kann auch bezüglich der Flaschenreinigungsmaschine beweglich sein. Insbesondere muss der Roboterarm nicht permanent im Einlaufbereich der Flaschenreinigungsmaschine angeordnet sein, sondern kann auch beispielsweise als fahrbares Modul vorgesehen sein, das je nach Bedarf zur Flaschenreinigungsmaschine verbracht und dort so angeordnet werden kann, dass er in den Einlaufbereich zum Manipulieren einer verklemmten oder beschädigten Flasche eingreifen kann.

Das "Manipulieren" einer Flasche umfasst jegliche Interaktion mit der Flasche oder Teilen der Flasche. Ist eine Flasche beispielsweise im Einlaufbereich zerbrochen, so ist vorgesehen, dass der Roboterarm die übrigen Teile der Flasche (Glassplitter) aus dem Einlaufbereich entfernen kann. Ist die Flasche hingegen verklemmt, so kann vorgesehen sein, dass der Roboter beim "Manipulieren" der Flasche diese lediglich wieder in eine vorgesehene Position bringt oder aus dem Einlaufbereich entfernt. Das Manipulieren kann ferner ein Zerstören oder Zertrümmern der Flasche und eine Kombination der beschriebenen Handlungen umfassen.

Eine "verklemmte" Flasche ist als solche Flasche anzusehen, die trotz funktionsfähiger Transporteinrichtungen nicht dem üblichen Bewegungsablauf der Flaschen von der ersten Transporteinrichtung in die zweite Transporteinrichtung folgt und gegebenenfalls auch weitere Flaschen am Weitertransport hindert.

Mit dieser Flaschenreinigungsmaschine kann gewährleistet werden, dass Flaschen, die den weiteren Transport behindern, möglichst schnell durch Zuhilfenahme des Roboterarms entfernt werden können. Da der Bediener so nicht mehr in den Flaschenstrom manuell eingreifen muss, sinkt gleichzeitig das Verletzungsrisiko.

Weiterhin kann ein Bedienelement vorgesehen sein, das zum Bedienen des Roboterarms durch den Bediener ausgebildet ist. Hierzu zählen sämtliche Vorrichtungen, die zur Interaktion eines Bedieners mit dem Roboterarm ausgebildet sind, inklusive Tastaturen, Maus oder andere bekannte Eingabeeinrichtungen, aber auch Virtual-Reality-Interfaces, wie beispielsweise Datenbrillen und entsprechende Interaktionsmöglichkeiten, wie Controller.

Gemäß der Erfindung ist das Bedienelement als intelligenter Handschuh ausgebildet oder umfasst diesen. Ein intelligenter Handschuh ist eine Vorrichtung, die von einem Bediener wie ein handelsüblicher Handschuh getragen werden kann, jedoch über Elektronik verfügt, die auf die Bewegung des Bedieners reagiert und diese zumindest aufzeichnen kann.

In einer Ausführungsform kann ferner eine Steuereinheit in Form eines Computers oder anderer Datenverarbeitungseinrichtungen vorgesehen sein, an die der intelligente Handschuh die gemessenen Daten übermitteln kann und die ausgebildet ist, die Bewegung des Bedieners in eine Bewegung des Roboterarms zu übersetzen, sodass im Wesentlichen der Roboterarm der Bewegung des Bedieners folgt.

In einer Ausführungsform kann der Bediener den Roboterarm aus einer Entfernung von wenigstens 3 m, bevorzugt wenigstens 10 m, bedienen. Somit kann sich der Bediener auch weitab von dem Einlaufbereich der Flaschenreinigungsmaschine befinden, sodass das Verletzungsrisiko minimiert werden kann. Ferner muss der Bediener so nicht mehr in die Nähe der Flaschenreinigungsmaschine laufen, um eine Flasche im Einlaufbereich zu manipulieren.

In einer Ausführungsform ist vorgesehen, dass die Erkennungseinrichtung als Kamera ausgebildet ist und Bilddaten an eine Virtual-Reality-Brille übertragen kann, die vom Bediener zum Bedienen des Roboterarms genutzt werden kann. Der Bediener wird so befähigt, auf möglichst natürliche Weise mit dem Roboterarm und der Flasche im Einlaufbereich zu interagieren, was die benötigte Zeit für das Manipulieren der verklemmten oder beschädigten Flasche vorteilhaft reduzieren kann.

In einer Ausführungsform umfasst der Roboterarm ein Greifelement zum Greifen einer Flasche und/oder ein Element zum Zertrümmern einer Flasche. Das Greifelement kann dabei pneumatisch ausgebildet sein oder mit Hilfe eines oder mehrerer Aktuatoren (Servomotoren) bewegt werden. Für das Zertrümmern einer Flasche kann das Element beispielsweise als "Hammer" oder "Stößel" ausgebildet sein, sodass durch ausreichenden Kraftaufwand eine Zerstörung der Flasche bewirkt werden kann. Der Roboterarm ist auf diese Weise möglichst flexibel einsetzbar. Ferner kann vorgesehen sein, dass der Roboterarm weiterhin ein Element zum Umrüsten von Komponenten der Flaschenreinigungsmaschine im Einlaufbereich und/oder der zweiten Transporteinrichtung umfasst. Das "Umrüsten" umfasst hier den Austausch oder die physische Manipulation irgendwelcher mechanischer oder zumindest physischer Komponenten im Einlaufbereich und/oder der zweiten Transporteinrichtung. Über die Manipulation von Flaschen hinaus kann der Roboterarm so zusätzlich bei für einen Bediener üblicherweise physisch anstrengenden Arbeiten genutzt werden.

Das erfindungsgemäße Verfahren zum Entfernen von Flaschen aus einem Einlaufbereich einer Flaschenreinigungsmaschine, wobei die Flaschen im Einlaufbereich von einer ersten Transporteinrichtung, in der die Flaschen in einem Massenstrom stehend transportiert werden, an eine zweite Transporteinrichtung übergeben werden, die die Flaschen vom Einlaufbereich durch die Flaschenreinigungsmaschine transportiert, umfasst, dass eine im Einlaufbereich angeordnete Erkennungseinrichtung eine im Einlaufbereich verklemmte oder beschädigte Flasche erkennt und ein Bediener mittels eines im Einlaufbereich vorgesehenen Roboterarms die verklemmte oder beschädigte Flasche manipuliert. Die benötigte Zeit, um eine verklemmte oder beschädigte Flasche aus der Flaschenreinigungsmaschine und insbesondere dem Einlaufbereich zu entfernen, kann hiermit vorteilhaft reduziert werden.

In einer Ausführungsform des Verfahrens umfasst das Manipulieren der Flasche ein Bewegen und/oder ein Zertrümmern der Flasche. Eine beispielsweise nur leicht schräg gestellte Flasche kann durch geringfügiges Umpositionieren üblicherweise wieder so ausgerichtet werden, dass der Transport der Flasche und auch der nachfolgenden Flaschen fortgesetzt werden kann. Bei einer zu stark "verkanteten" Flasche oder einer Flasche, die so positioniert ist, dass ein weiteres Bewegen unweigerlich zum Zerstören der Flasche führen würde, kann es von Vorteil sein, diese kontrolliert zu zerstören, um so ein willkürliches Hineingelangen von Glassplittern in die Maschine zu verhindern.

Weiterhin ist vorgesehen, dass der Bediener den Roboterarm mittels eines intelligenten Handschuhs bedient.

Darüber hinaus kann der Bediener den Roboterarm aus einer Entfernung von wenigstens 3 m, bevorzugt wenigstens 10 m, bedienen. Die unmittelbare physische Anwesenheit des Bedieners ist dann nicht erforderlich.

In einer Ausführungsform ist vorgesehen, dass die Erkennungseinrichtung eine Kamera ist oder diese umfasst, und Bilddaten an eine Virtual-Reality-Brille überträgt und dem Bediener eine Ansicht des Einlaufbereichs angezeigt wird, während er den Roboterarm bedient. Die Interaktion mit dem Roboter wird so vereinfacht.

In einer Weiterbildung dieser Ausführungsform erfolgt die Ansicht des Einlaufbereichs in Echtzeit.

In einer Ausführungsform ist vorgesehen, dass der Roboterarm ein Element zum Umrüsten von Komponenten der Flaschenreinigungsmaschine im Einlaufbereich und/oder der zweiten Transporteinrichtung umfasst und der Roboterarm zumindest einen Verfahrensschritt beim Umrüsten des Einlaufbereichs und/oder der zweiten Transporteinrichtung durchführt. Der Roboterarm kann so vorteilhaft auch für weitere Handhabungsschritte verwendet werden.

In einer Weiterbildung dieser Ausführungsform wird der Roboterarm beim Durchführen des Verfahrensschritts von einer Steuereinheit oder von dem Bediener gesteuert. Das Umrüsten kann somit automatisch oder unter Mitwirkung des Bedieners erfolgen.

### Kurze Beschreibung der Figuren

- Fig. 1: zeigt schematisch eine Flaschenreinigungsmaschine in Seitenansicht;
- Fig. 2: zeigt den Einlaufbereich einer Flaschenreinigungsmaschine gemäß einer Ausführungsform der Erfindung;
- Fig. 3a + b: zeigen die Steuerung eines Roboterarms durch einen Bediener schematisch;
- Fig. 4a - 4c: zeigen verschiedene Ausführungsformen des Roboterarms.

### Ausführliche Beschreibung

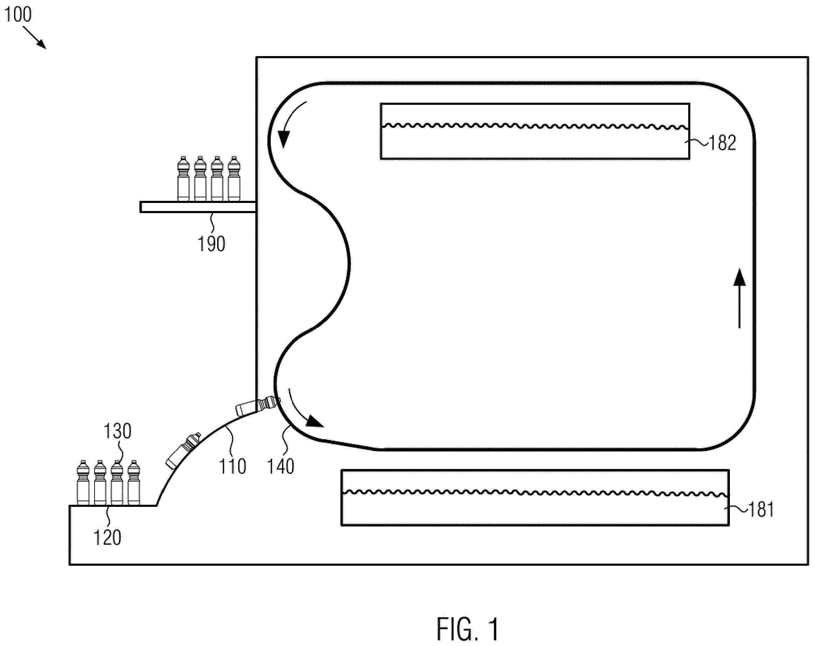

Fig. 1 zeigt schematisch eine Flaschenreinigungsmaschine 100 in Seitenansicht. Die Flaschenreinigungsmaschine verfügt über einen Einlaufbereich 110, in den die Flaschen aus einer ersten Transporteinrichtung 120 einlaufen und über eine zweite Transporteinrichtung 140, die sich an den Einlaufbereich 110 anschließt. Üblicherweise werden dabei die Flaschen aus der ersten Transporteinrichtung 120, in der diese in einem Massenstrom ungeordnet und stehend transportiert werden, im Einlaufbereich 110 vereinzelt, indem sie beispielsweise auf einigen Bahnen verteilt werden, die jeweils lediglich eine Flasche nacheinander aufnehmen können.

Anschließend werden sie vereinzelt an die Transporteinrichtung 140 übergeben, die z. B. in Form einer kontinuierlich umlaufenden Kette mit Aufnahmen und Halterungen für Behälter ausgebildet sein kann. Bezüglich der zweiten Transporteinrichtung 140 sind auch andere Ausführungsformen denkbar. Die Transporteinrichtung 140 verläuft üblicherweise so durch die Flaschenreinigungsmaschine, dass sie an einem oder mehreren Reinigungsbädern 181 und 182 vorbeiführt. Diese Reinigungsbäder können beispielsweise mit Lauge oder anderen reinigenden Flüssigkeiten befüllt sein und die Flaschen 130 von Schmutz befreien. Auch hier sind die Ausführungsformen nicht auf die genannten Beispiele beschränkt und sämtliche im bekannten Stand der Technik üblichen Vorgehen zum Reinigen der Flaschen können genutzt werden.

Nach Durchlaufen sämtlicher Reinigungsbäder kann die Transporteinrichtung 140 die Flaschen an einen Auslaufbereich 190 übergeben, von dem aus die Flaschen beispielsweise erneut in einem ungeordneten Massenstrom zu weiteren Behälterbehandlungsmaschinen transportiert werden können. Der Auslaufbereich 190 kann dabei auf derselben Seite der Flaschenreinigungsmaschine 100 angeordnet sein, wie dies hier dargestellt ist. Dann ist der Auslaufbereich 190 üblicherweise in einer anderen Höhe angeordnet als der Einlaufbereich 120. Es sind aber auch Ausführungsformen möglich, in denen der Auslaufbereich 190 und der Einlaufbereich 120 "nebeneinander" im Wesentlichen in derselben horizontalen Ebene angeordnet sind. Es kann auch vorgesehen sein, dass der Einlaufbereich 120 und der Auslaufbereich 190 an gegenüberliegenden Enden oder zumindest an verschiedenen Seiten der Flaschenreinigungsmaschine 100 angeordnet sind.

Erfindungsgemäß umfasst die Flaschenreinigungsmaschine weiterhin einen Roboterarm, wie dies in den folgenden Figuren ausgeführt wird.

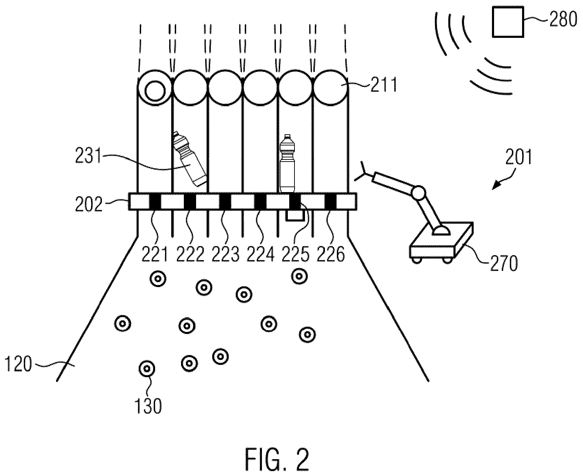

Fig. 2 zeigt hierzu den Einlaufbereich 110 der Flaschenreinigungsmaschine 100 isoliert von den übrigen Komponenten in Fig. 1.

In Fig. 2 ist ein Roboterarm 201 im bzw. neben dem Einlaufbereich 110 dargestellt. In der Fig. 2 ist der Roboterarm 201 zwar hier angeordnet, diese Anordnung muss jedoch keine ortsfeste Anordnung bedeuten. Vielmehr ist vorgesehen, dass der Roboterarm gemäß bevorzugter Ausführungsformen nur dann im Bereich des Einlaufbereichs 110 positioniert wird, wenn er auch tatsächlich verwendet werden muss. Zu diesem Zweck kann der Roboterarm 201 beispielsweise auf einem Podest 270 angeordnet sein, das weiterhin über Rollen oder antreibbare Räder verfügt, sodass der Roboterarm je nach Bedarf am Einlaufbereich 110 positioniert werden kann.

Es sind auch Ausführungsformen denkbar, bei denen der Roboterarm 201 fest im oder am Einlaufbereich 110 montiert ist, beispielsweise an einem Teil der Verkleidung der Flaschenreinigungsmaschine aus Fig. 1.

In jedem Fall ist der Roboterarm 201 so ausgebildet, dass er von einem Bediener, der sich beispielsweise in der Nähe des Einlaufbereichs befindet, gesteuert werden kann. Es ist jedoch besonders bevorzugt, dass der Roboterarm 201 auch von einem Bediener gesteuert werden kann, der sich einige Meter entfernt von der Flaschenreinigungsmaschine und insbesondere dem Einlaufbereich befindet. Eine solche Ausführung ist besonders bevorzugt, da der Bediener aufgrund der baulichen Eigenschaften der Flaschenreinigungsmaschine und insbesondere der üblichen Größe der ersten Transporteinrichtung in keinem Fall in der Lage sein wird, von außerhalb der ersten Transporteinrichtung in den Einlaufbereich einzugreifen oder den Roboter unmittelbar manuell zu bedienen.

Weiterhin ist erfindungsgemäß im Einlaufbereich 110, zumindest in dem Bereich, in dem die Flaschen liegend transportiert werden, bevor sie beispielsweise vereinzelt in die dargestellten Aufnahmen 211 übergeben und anschließend der zweiten Transporteinrichtung 140 aus Fig. 1 zugeführt werden, eine Erkennungseinrichtung 202 angeordnet. Diese Erkennungseinrichtung 202 ist so ausgebildet, dass sie Flaschen im Einlaufbereich 110 erkennen kann. Dies kann beispielsweise mit Hilfe von im Stand der Technik grundsätzlich bekannten Bilderkennungsvorrichtungen geschehen. So kann die Erkennungseinrichtung 202 über einen oder mehrere Sensoren 221 - 226 verfügen, die so angeordnet sind, dass sie die Flaschen in den vereinzelten Reihen erkennen können. Beispielsweise kann es sich bei den Sensoren um Kameras oder andere optisch arbeitende Sensoren handeln. Die Sensoren bzw. die Erkennungseinrichtung 202 allgemein ist vorzugsweise mit einer Steuereinheit 280 verbunden. Dieser Steuereinheit 280 kann die Erkennungseinrichtung bevorzugt Informationen in Form von Daten übermitteln, die die erkannten Flaschen betreffen.

Erfindungsgemäß ist die Erkennungseinrichtung so ausgebildet, dass sie zwischen einer normal positionierten Flasche und einer beschädigten Flasche oder einer falsch positionierten Flasche unterscheiden kann. Auch dies kann über bereits bekannte Bilderkennungssysteme realisiert werden, die je nach Programmierung durchaus in der Lage sind, bestimmte Eigenschaften von Objekten auf Bildern zu erkennen.

Weiterhin oder zusätzlich kann unter dem Begriff der "falsch positionierten" Flasche auch eine Flasche verstanden werden, die zu groß oder zu klein für die derzeitig vorgesehenen Garnituren und/oder Aufnahmen im Einlaufbereich ist. So können Flaschen entweder zu lang oder zu kurz sein, um korrekt aufgenommen zu werden. Auch können sie zu breit oder zu dünn (im Querschnitt) sein, um im Einlaufbereich korrekt gehandhabt zu werden. Auch diese Fälle können von einer geeigneten Erkennungseinrichtung erfasst werden. So kann die Erkennungseinrichtung auch eine Höhenmessung in Form einer oder mehrerer optischer Sensoren, insbesondere Lichtschranken umfassen, die die äußeren Abmessungen jeder Flasche erfassen. Mit diesen können zu hohe, zu kurze, zu breite oder zu schmale Flaschen erkannt werden.

Wird eine falsch positionierte Flasche (hierzu zählt auch eine Flasche mit falschen Abmessungen, wie eben beschrieben), beispielsweise die Flasche 231, durch die Erkennungseinrichtung 202 erkannt, kann diese oder die Steuereinheit 280 eine Warnung oder andere Informationen an den Bediener der Flaschenreinigungsmaschine ausgeben, der dadurch veranlasst wird, den Roboterarm 201 zu bedienen, um die falsch positionierte Flasche oder die beschädigte Flasche zu manipulieren.

Dies kann umfassen, dass eine beschädigte Flasche ganz aus dem Einlaufbereich 110 entfernt wird. Eine falsch positionierte Flasche, wie beispielsweise die Flasche 231 hingegen, kann mit Hilfe des Roboterarms 201 durch den Bediener richtig positioniert werden, sodass sie weiter im Einlaufbereich transportiert und der zweiten Transporteinrichtung 140 zugeführt werden kann. Wenn auch hier nicht dargestellt, so können doch die von der Erkennungseinrichtung 202 gewonnenen Daten mit Hilfe der Steuereinheit 280 so aufbereitet werden, dass sie dem Bediener beim Bedienen des Roboterarms 201 assistieren können.

In einer besonders bevorzugten Ausführungsform kann vorgesehen sein, dass die Erkennungseinrichtung eine oder mehrere Kameras umfasst und der Bediener über eine Virtual-Reality-Brille verfügt, wie sie bereits erhältlich sind. Die Steuereinheit kann dann die von den Kameras gewonnenen Bilddaten so aufbereiten, dass sie dem Bediener angezeigt werden können. So kann dem Bediener beispielsweise ein zweidimensionales Bild oder sogar ein dreidimensionales Bild des Einlaufbereichs mit der zu manipulierenden Flasche angezeigt werden, woraufhin der Bediener den Roboterarm steuern kann, um die Flasche zu manipulieren. Dabei erfolgt die Anzeige der Bildinformationen bevorzugt in Echtzeit, sodass der Bediener auch aus einer gewissen Entfernung gewissermaßen unmittelbar mit dem Einlaufbereich 110 und der zu manipulierenden Flasche interagieren kann.

Die Interaktion mit dem Roboterarm und damit letztlich auch mit der zu manipulierenden Flasche erfolgt über ein Bedienelement.

Um dem Bediener eine möglichst komfortable Möglichkeit zum Interagieren mit dem Roboterarm zu gewähren, ist die Verwendung von intelligenten Handschuhen vorteilhaft.

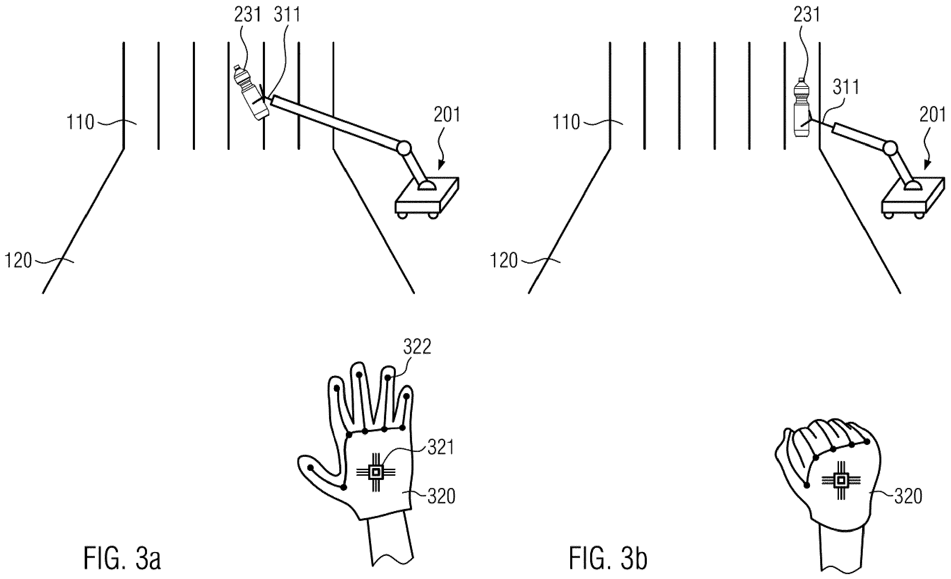

Hierzu zeigen Fig. 3a und 3b schematisch die Bedienung des Roboterarms unter Verwendung eines solchen intelligenten Handschuhs.

Grundsätzlich umfasst der intelligente Handschuh 320 eine Form, die es einem Bediener ermöglicht, den intelligenten Handschuh 320 wie einen üblichen Handschuh zu tragen. Insbesondere sollte der intelligente Handschuh über fünf "Finger" verfügen, um dem Bediener auch eine möglichst große Bewegungsfreiheit zu gewähren.

Ferner verfügt der intelligente Handschuh über einen, bevorzugt über eine Vielzahl von Sensoren 322, die geeignet sind, die Bewegung eines Fingers und/oder der ganzen Hand wahrzunehmen. Zu diesen Sensoren zählen beispielsweise Gyroskope oder Sensoren, die einen elektrischen Widerstand messen können, der bei Deformation eines metallischen Elements auftritt. Auch andere bereits bekannte Sensoren sind hier denkbar.

Weiterhin umfasst der intelligente Handschuh bevorzugt, aber nicht zwingend, eine integrierte Prozessoreinheit 321, die auch über einen internen Speicher verfügen kann. Die integrierte Prozessoreinheit 321 kann die Daten, die die Sensoren 322 erfassen, verarbeiten. Weiterhin kann vorgesehen sein, dass diese Einheit 321 entweder mit der Steuereinheit 280 (siehe Fig. 2) der Flaschenreinigungsmaschine oder direkt mit dem Roboterarm 201 zumindest zum Zweck des Datenaustausches verbunden ist. Dies bedeutet, dass die Prozessoreinheit 321 beispielsweise über einen Transponder und/oder Receiver verfügt, um Daten zu übermitteln und/oder zu empfangen. Diese können so ausgebildet sein, dass sie zur drahtlosen Datenkommunikation ausgebildet sind (Wireless Transponder und Receiver) oder über eine Kabelverbindung mit der Steuereinheit oder dem Roboterarm 201 verbunden sind.

In der Fig. 3a ist die Situation dargestellt, in der der Roboterarm 201 zunächst in einer Ausgangsposition neben dem hier nicht weiter dargestellten Eingangsbereich angeordnet ist. Die Erkennungseinrichtung (siehe Fig. 2) oder der Bediener selbst können eine falsch positionierte oder beschädigte Flasche 231 erkannt haben, sodass der Einsatz des Roboterarms notwendig ist. Um den Roboterarm nun in Richtung der zu manipulierenden Flasche 231 zu bewegen, kann der Bediener seine Hand und/oder seinen gesamten Arm bewegen, als würde er versuchen, die Flasche zu greifen. Der Roboterarm kann ausgebildet sein, diesen Bewegungen möglichst exakt zu folgen bzw. den Bewegungen intelligent zu folgen, sodass Zusammenstöße mit anderen Komponenten als der zu manipulierenden Flasche 231 vermieden werden können. Durch die Bewegungen des Arms und/oder der Hand kann der Bediener den Roboterarm so ausrichten, dass ein an dem Roboterarm befestigtes Element (Werkzeug, wie beispielsweise eine Zange) so positioniert wird, dass es mit der Flasche 231 in Wechselwirkung treten kann. Handelt es sich beispielsweise um ein Element zum Greifen der Flasche, kann vorgesehen sein, dass der Bediener das Element zunächst um die zu manipulierende Flasche 231 herum positioniert, bevor er mit dem Element zugreift.

In einem nächsten Schritt, der in Fig. 3b dargestellt ist, kann der Bediener mit dem Greifelement zugreifen, indem er beispielsweise seine Hand zu einer Faust formt, was den Roboterarm veranlasst, das Greifelement um die Flasche zu schließen. Auch hier kann es besonders vorteilhaft sein, wenn der Roboterarm und auch das Greifelement zwar grundsätzlich der Bewegung des Bedieners folgen, dies jedoch auf intelligente Weise tun, sodass unabsichtliche Beschädigungen oder Berührungen von anderen Maschinenkomponenten vermieden werden. Dazu können weitere Sensoren, insbesondere ein Kraftsensor oder Drucksensor vorgesehen sein, die die vom Greifelement auf die Flasche ausgeübte Kraft messen. Übersteigt die ausgeübte Kraft einen vorgesehenen Grenzwert, der eine zerstörungsfreie Manipulation der Flasche sicherstellt, keine eine weitere Erhöhung der durch das Greifelement auf die Flasche ausgeübten Kraft durch die Steuereinheit oder eine geeignete, die Bewegung des Greifelements steuernde Einrichtung unterbunden werden. Dies gilt auch dann, wenn die vom Bediener ausgeführte Bewegung ein weiteres Erhöhen der vom Greifelement auf die Flasche ausgeübten Kraft bewirken würde. So kann zwar der Bewegung des Bedieners gefolgt, eine unbeabsichtigte Zerstörung der Flasche durch das Greifelement jedoch vermieden werden.

Hat der Bediener mit Hilfe des Roboterarms die zu manipulierende Flasche gegriffen, kann er erneut durch geeignete Bewegung seines Arms und/oder seiner Hand eine Bewegung der zu manipulierenden Flasche bewirken. Beispielsweise kann er die Flasche aus dem Einlaufbereich 110 entfernen oder sie innerhalb des Einlaufbereichs richtig positionieren.

Ist die Flasche jedoch beschädigt oder handelt es sich um eine bereits zerstörte Flasche, von der lediglich einige Glassplitter in dem Einlaufbereich 110 verbleiben, so kann der Bediener auch die einzelnen Glassplitter aus dem Einlaufbereich entfernen, indem er den Roboterarm entsprechend steuert.

Alternativ dazu kann auch vorgesehen sein, dass der Roboterarm ein Element zum absichtlichen Zertrümmern einer zu manipulierenden Flasche umfasst. Dieses Element kann in Form eines Stößels oder Hammers ausgebildet sein, sodass durch geeignete Handbewegungen des Bedieners mit dem intelligenten Handschuh, auch beispielsweise ruckartiges Bewegen, der Roboterarm eine solche Bewegung mit dem Stößel durchführt, um die Flasche zu zertrümmern. Anschließend kann der Stößel ausgewechselt werden oder ein zweites am Roboterarm angeordnetes Element (Greifelement) genutzt werden, um die Bruchstücke aufzusammeln.

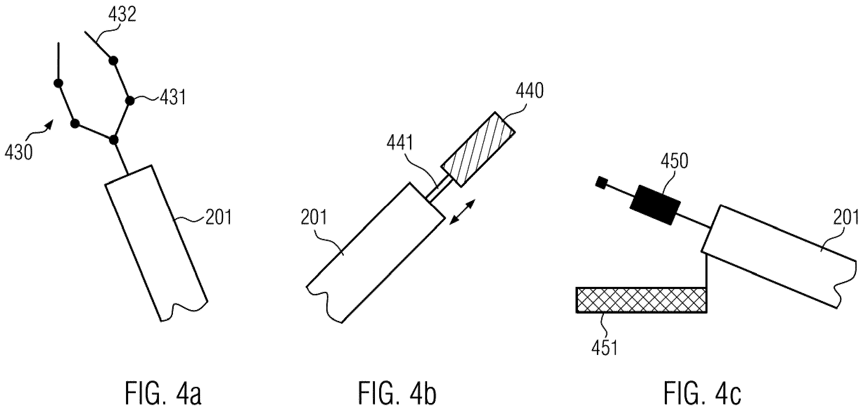

Die Fig. 4a - 4c zeigen hierzu weitere Ausführungsformen.

In Fig. 4a ist die bereits beschriebene Ausführungsform dargestellt, dass der Roboterarm über ein Greifelement 430 verfügt. Dieses ist hier mehrteilig dargestellt, sodass eine Reihe von Gliedern 432 über bewegliche Gelenke 431 miteinander verbunden sind und so eine möglichst vielseitige Einsetzbarkeit des Greifelements gewährleistet wird. Es sind aber auch einfachere Varianten ohne zusätzliche Gelenke und Glieder denkbar, sodass das Greifelement lediglich als Zange ausgebildet sein kann. Auch kompliziertere Ausführungsformen kommen hier in Betracht. So kann beispielsweise anstelle eines mechanischen Greifelements mit Gliedern und Gelenken ein pneumatisch arbeitendes Aufnahmeelement vorgesehen sein, das durch Beaufschlagung mit Druckluft geeignet ist, einen Behälter anzusaugen und festzuhalten. Auch andere Ausführungsformen sind denkbar.

Fig. 4b zeigt eine Ausführungsform, in der der Roboterarm einen Stößel 440 umfasst. Dieser Stößel kann genutzt werden, um, wie oben beschrieben, Flaschen zu zertrümmern. Der Stößel kann über ein geeignetes Verbindungselement 441 mit dem übrigen Roboterarm verbunden sein. Das Verbindungselement 441 wiederum kann mit einem hier nicht dargestellten Aktuator verbunden sein, sodass es in Richtung des Roboterarms hin oder vom Roboterarm weg bewegt werden, um beispielsweise zusätzlich eine Stoßbewegung des Stößels zu verursachen und eine Flasche zu zertrümmern.

Der Stößel 440 besteht aus oder umfasst bevorzugt ein hartes Material, sodass ein Zerschlagen einer Flasche zuverlässig gelingt und Beschädigungen des Stößels möglichst vermieden werden. Da der Stößel im Bereich der Flaschenreinigungsmaschine auch der Benetzung mit Flüssigkeit ausgesetzt sein kann, kann vorgesehen sein, dass der Stößel aus einem resistenten Material wie Edelstahl besteht oder zumindest eine äußere Beschichtung aus Edelstahl umfasst. Das Innere des Stößels kann in diesem Fall aus einem leichteren Material bestehen, um die Belastung des Roboterarms möglichst gering zu halten. Da bei Verwendung von geeigneten Aktuatoren ein hoher Impuls und damit Stoßkraft auf die Flasche übertragen werden kann, kann der Stößel möglichst leicht ausgeführt sein, beispielsweise nicht mehr als 200 g wiegen, was die gesamte Ausführung des Roboterarms vereinfacht und weniger Materialeinsatz bedeutet.

In der in Fig. 4c dargestellten Ausführungsform ist der Roboterarm ausgebildet, neben dem Manipulieren von nicht ordnungsgemäß in dem Einlaufbereich der Flaschenreinigungsmaschine positionierten Flaschen auch an Umrüsttätigkeiten der Flaschenreinigungsmaschine mitzuwirken. Dazu zählt beispielsweise der Umbau der Flaschenreinigungsmaschine von einer ersten Flaschengröße auf eine zweite Flaschengröße. Aber auch andere Arbeiten, beispielsweise das Austauschen einzelner Komponenten zu Reparaturzwecken, sind hiermit umfasst. In jedem Fall verfügt der Roboterarm in dieser Ausführungsform über ein Element 450, das es ihm gestattet, an zumindest einem Verfahrensschritt während des Umrüstens mitzuwirken. Beispielhaft kann das Element 450 als Schraubenzieher ausgebildet sein, um lösbare Verbindungen zu lösen. Zusätzlich kann hier auch ein Behälter 451 vorgesehen sein, der beispielsweise herabfallende Schrauben auffangen kann, oder zum Vorhalten anderer, für das Umrüsten der Flaschenreinigungsmaschine relevanter Teile genutzt wird.

Insbesondere kommen hier Ausführungsformen infrage, bei denen das Umrüsten der Flaschenreinigungsmaschine ein Umrüsten von Behälteraufnahmen oder Garnituren im Einlaufbereich der Flaschenreinigungsmaschine umfasst. Wie beispielhaft in Figur 2 dargestellt, werden die Flaschen im Einlaufbereich vom zunächst stehenden Transport in der ersten Transporteinrichtung umgelegt, sodass sie letztlich liegend in geeignete Aufnahmen 211 eingeführt werden, von denen aus sie an die zweite Transporteinrichtung übergeben werden. Diese Aufnahmen oder mit dem Einlaufbereich verbundene Garnituren können von dem Roboterarm ausgetauscht werden. So kann der Roboterarm beispielsweise in der Ausführungsform gemäß Fig. 4c nicht nur ein geeignetes Werkzeug zum Umrüsten beliebiger Komponenten umfassen, sondern speziell dazu ausgebildet sein, Aufnahmen und Garnituren aus dem Einlaufbereich zu entfernen und durch andere Aufnahmen oder Garnituren zu ersetzen. Dafür ist der Roboterarm bevorzugt mit sämtlichen dafür nötigen Werkzeugen (Greifer und ähnliches) ausgestattet und ausgebildet, aus dem Einlaufbereich entfernte Aufnahmen/Garnituren aufzunehmen und einem Ablagebereich für diese zuzuführen. Der Ablagebereich kann beispielsweise ein Tisch, Stapel, Wagen oder ähnliches sein, der zur Aufnahme der Aufnahmen/Garnituren bereitgestellt ist und sich im Wirkungsbereich des Roboters befindet. Entsprechend ist der Roboter ausgebildet, aus einem Bereitstellungsbereich (Tisch, Wagen, oder ähnliches) die neu einzubauenden Aufnahmen/Garnituren zu entnehmen und im Einlaufbereich einzubauen.

## Patentansprüche

1. Flaschenreinigungsmaschine (100) zum Reinigen von Flaschen (130) in der getränkeverarbeitenden Industrie, mit einer ersten Transporteinrichtung (120) zum ungeordneten, stehenden Transport von Flaschen in einem Massenstrom zu einem Einlaufbereich (110) der Flaschenreinigungsmaschine, wobei im Einlaufbereich die Flaschen von der ersten Transporteinrichtung an eine zweite Transporteinrichtung (140) übergeben werden, die die Flaschen vom Einlaufbereich durch die Flaschenreinigungsmaschine transportieren kann, wobei in oder vordem Einlaufbereich (110) eine Erkennungseinrichtung (202) zum Erkennen einer im Einlaufbereich verklemmten oder beschädigten Flasche angeordnet ist und im Einlaufbereich ein Roboterarm (201) vorgesehen ist, der durch einen Bediener bedient werden kann, um eine verklemmte oder beschädigte Flasche (130) zu manipulieren, wobei ein Bedienelement vorgesehen ist, das zum Bedienen des Roboterarms durch den Bediener ausgebildet ist, dadurch gegenzeichnet dass das Bedienelement als intelligenter Handschuh (320) ausgebildet ist oder diesen umfasst.

2. Flaschenreinigungsmaschine (100) nach Anspruch 1, wobei der Bediener den Roboterarm (201) aus einer Entfernung von wenigstens 3m, bevorzugt wenigstens 10m bedienen kann.

3. Flaschenreinigungsmaschine (100) nach Anspruch 1 oder 2, wobei die Erkennungseinrichtung (202) als Kamera ausgebildet ist und Bilddaten an eine Virtual-Reality-Brille übertragen kann, die vom Bediener zum Bedienen des Roboterarms (201) genutzt werden kann.

4. Flaschenreinigungsmaschine (100) nach einem der Ansprüche 1 bis 3, wobei der Roboterarm (201) ein Greifelement (430) zum Greifen einer Flasche und/oder ein Element (440) zum Zertrümmern einer Flasche umfasst.

5. Flaschenreinigungsmaschine (100) nach einem der Ansprüche 1 bis 4, wobei der Roboterarm (201) weiterhin ein Element (450) zum Umrüsten von Komponenten der Flaschenreinigungsmaschine im Einlaufbereich (110) und/oder der zweiten Transporteinrichtung (140) umfasst.

6. Verfahren zum Entfernen von Flaschen (130) aus einem Einlaufbereich (110) einer Flaschenreinigungsmaschine(100), wobei die Flaschen im Einlaufbereich von einer ersten Transporteinrichtung (120), in der die Flaschen in einem Massenstrom stehend transportiert werden, an eine zweite Transporteinrichtung (140) übergeben werden, die die Flaschen vom Einlaufbereich durch die Flaschenreinigungsmaschine transportiert, wobei eine im Einlaufbereich (110) angeordnete Erkennungseinrichtung (202) eine im Einlaufbereich verklemmte oder beschädigte Flasche erkennt und ein Bediener mittels eines im Einlaufbereich vorgesehenen Roboterarms (201) die verklemmte oder beschädigte Flasche manipuliert **dadurch gekennzeichnet dass** der Bediener den Roboterarm (201) mittels eines intelligenten Handschuhs (320) bedient.

7. Verfahren nach Anspruch 6, wobei das Manipulieren der Flasche ein Bewegen und/oder ein Zertrümmern der Flasche umfasst.

8. Verfahren nach Anspruch 6 oder 7, wobei der Bediener den Roboterarm (201) aus einer Entfernung von wenigstens 3m, bevorzugt wenigstens 10m bedient.

9. Verfahren nach einem der Ansprüche 6 bis 8, wobei die Erkennungseinrichtung (202) eine Kamera ist oder diese umfasst und Bilddaten an eine Virtual-Reality-Brille überträgt und dem Bediener eine Ansicht des Einlaufbereichs (110) angezeigt wird, während er den Roboterarm bedient.

10. Verfahren nach Anspruch 9, wobei die Ansicht den Einlaufbereich (110) in Echtzeit abbildet.

11. Verfahren nach einem der Ansprüche 6 bis 10, wobei der Roboterarm (201) ein Element (450) zum Umrüsten von Komponenten der Flaschenreinigungsmaschine im Einlaufbereich und/oder der zweiten Transporteinrichtung umfasst und der Roboterarm (201) zumindest einen Verfahrensschritt beim Umrüsten des Einlaufbereichs (110) und/oder der zweiten Transporteinrichtung (140) durchführt.

12. Verfahren nach Anspruch 11, wobei der Roboterarm (201) beim Durchführen des Verfahrensschritts von einer Steuereinheit (280) oder von dem Bediener gesteuert wird.

## Claims

1. A bottle cleaning machine (100) for cleaning bottles (130) in the beverage processing industry, comprising a first transport device (120) for transporting standing bottles in a random mass flow to an inlet area (110) of the bottle cleaning machine, wherein in the inlet area the bottles are transferred from the first transport device to a second transport device (140) which can transport the bottles from the inlet area through the bottle cleaning machine, wherein a detection device (202) for detecting a jammed or damaged bottle in the inlet area is arranged in the inlet area (110) or in front of it, and a robot arm (201) is provided in the inlet area, which can be operated by an operator in order to manipulate a jammed or damaged bottle (130), wherein an operating member is provided which is configured for operating the robot arm by the operator, **characterized in that** the operating member is designed as a smart glove (320) or comprises the same.

2. The bottle cleaning machine (100) according to claim 1, wherein the operator can operate the robot arm (201) from a distance of at least 3m, preferably at least 10m.

3. The bottle cleaning machine (100) according to claims 1 or 2, wherein the detection device (202) is configured as a camera and can transmit image data to virtual reality glasses that can be used by the operator to operate the robot arm (201).

4. The bottle cleaning machine (100) according to any one of claims 1 to 3, wherein the robot arm (201) comprises a gripping member (430) for gripping a bottle and/or a member (440) for crushing a bottle.

5. The bottle cleaning machine (100) according to any one of claims 1 to 4, wherein the robot arm (201) further comprises a member (450) for resetting components of the bottle cleaning machine in the inlet area (110) and/or the second transport device (140).

6. A method for removing bottles (130) from an inlet area (110) of a bottle cleaning machine (100), wherein the bottles in the inlet area are transferred from a first transport device (120) in which the bottles are transferred standing up in a mass flow to a second transport device (140) which transports the bottles from the inlet area through the bottle cleaning machine, and wherein a detection device (202) arranged in the inlet area (110) detects a jammed or damaged bottle in the inlet area and an operator manipulates the jammed or damaged bottle by means of a robot arm (201) provided in the inlet area, **characterised in that** the operator operates the robot arm (201) by means of a smart glove (320).

7. The method according to claim 6, wherein manipulating the bottle comprises moving and/or smashing the bottle.

8. The method according to claims 6 or 7, wherein the operator operates the robot arm (201) from a distance of at least 3m, preferably at least 10m.

9. The method according to any one of claims 6 to 8, wherein the detection device (202) is a camera or comprises the same and transmits image data to virtual reality glasses and wherein a view of the inlet area (110) is displayed to the operator while operating the robot arm.

10. The method according to claim 9, wherein the view depicts the inlet area (110) in real time.

11. The method according to any one of claims 6 to 10, wherein the robot arm (201) comprises a member (450) for resetting components of the bottle cleaning machine in the inlet area and/or the second transport device, and the robot arm (201) performs at least one process step in resetting the inlet area (110) and/or the second transport device (140).

12. The method according to claim 11, wherein the robot arm (201) is controlled by a control unit (280) or by the operator when performing the process step.

## Revendications

1. Machine de nettoyage de bouteilles (100) pour le nettoyage de bouteilles (130) dans l'industrie du traitement de boissons, comprenant un premier dispositif de transport (120) pour un transport debout désordonné de bouteilles dans un flux massique vers une zone d'entrée (110) de la machine de nettoyage de bouteilles, dans laquelle dans la zone d'entrée, les bouteilles sont transférées du premier dispositif de transport à un second dispositif de transport (140) qui peut transporter les bouteilles depuis la zone d'entrée à travers la machine de nettoyage de bouteilles, dans laquelle dans ou devant la zone d'entrée (110) est agencé un dispositif de détection (202) pour détecter une bouteille coincée ou détériorée dans la zone d'entrée, et dans la zone d'entrée est prévu un bras de robot (201) qui peut être utilisé par un opérateur pour manipuler une bouteille coincée ou détériorée (130), dans laquelle un élément d'utilisation qui est conçu pour utiliser le bras de robot via l'opérateur est prévu, **caractérisée en ce que** l'élément d'utilisation est ou comprend un gant intelligent (320).

2. Machine de nettoyage de bouteilles (100) selon la revendication 1, dans laquelle l'opérateur peut utiliser le bras de robot (201) à une distance d'au moins 3 m, de préférence d'au moins 10 m.

3. Machine de nettoyage de bouteilles (100) selon la revendication 1 ou 2, dans laquelle le dispositif de détection (202) est formé sous la forme d'une caméra et peut transmettre des données d'image à des lunettes de réalité virtuelle qui peuvent être utilisées par l'opérateur pour utiliser le bras de robot (201).

4. Machine de nettoyage de bouteilles (100) selon l'une quelconque des revendications 1 à 3, dans laquelle le bras de robot (201) comprend un élément de préhension (430) pour saisir une bouteille et/ou un élément (440) pour détruire une bouteille.

5. Machine de nettoyage de bouteilles (100) selon l'une quelconque des revendications 1 à 4, dans laquelle le bras de robot (201) comprend en outre un élément (450) pour modifier des composants de la machine de nettoyage de bouteilles dans la zone d'entrée (110) et/ou le second moyen de transport (140).

6. Procédé d'élimination de bouteilles (130) d'une zone d'entrée (110) d'une machine de nettoyage de bouteilles (100), dans lequel les bouteilles sont transférées dans la zone d'entrée depuis un premier dispositif de transport (120), dans lequel les bouteilles sont transportées debout dans un flux massique, à un second dispositif de transport (140), qui transporte les bouteilles de la zone d'entrée à travers la machine de nettoyage de bouteilles, dans lequel un dispositif de détection (202) agencé dans la zone d'entrée (110) détecte une bouteille coincée ou détériorée dans la zone d'entrée et un opérateur manipule la bouteille coincée ou détériorée au moyen d'un bras de robot (201) prévu dans la zone d'entrée, **caractérisé en ce que** l'opérateur utilise le bras de robot (201) au moyen d'un gant intelligent (320).

7. Procédé selon la revendication 6, dans lequel la manipulation de la bouteille comprend un déplacement et/ou une destruction de la bouteille.

8. Procédé selon la revendication 6 ou 7, dans lequel l'opérateur utilise le bras de robot (201) à une distance d'au moins 3 m, de préférence d'au moins 10 m.

9. Procédé selon l'une quelconque des revendications 6 à 8, dans lequel le dispositif de détection (202) est ou comprend une caméra et transmet des données d'image à des lunettes de réalité virtuelle, et une vue de la zone d'entrée (110) est affichée à l'opérateur pendant qu'il utilise le bras de robot.

10. Procédé selon la revendication 9, dans lequel la vue représente la zone d'entrée (110) en temps réel.

11. Procédé selon l'une quelconque des revendications 6 à 10, dans lequel le bras de robot (201) comprend un élément (450) pour modifier des composants de la machine de nettoyage de bouteilles dans la zone d'entrée et/ou le second dispositif de transport, et le bras de robot (201) effectue au moins une étape de procédé lors de la modification de la zone d'entrée (110) et/ou du second dispositif de transport (140).

12. Procédé selon la revendication 11, dans lequel le bras de robot (201) est commandé par une unité de commande (280) ou par l'opérateur lors de l'exécution de l'étape de procédé.
